# EUROPÄISCHE PATENTANMELDUNG

(11) **EP 4 465 511 A1**
(43) Veröffentlichungstag der Anmeldung: **20.11.2024**
(21) Anmeldenummer: 23173653.9
(22) Anmeldetag: 16.05.2023
(51) Int. Cl.: H02M 1/00, H02M 7/493, H02M 7/5387

(54) **SERIALISIERUNGSVERFAHREN FÜR DIGITALISIERTE DATENSTRÖME**

(71) Anmelder: Siemens Aktiengesellschaft, 80333 München (DE)
(72) Erfinder: Herrmann, Bernd, 91074 Herzogenaurach (DE); Jänicke, Peter, 90765 Fürth (DE); Wiessmann, Harald, 91058 Erlangen (DE)
(74) Vertreter: Siemens Patent Attorneys

(57) **Zusammenfassung**

Die Erfindung betrifft Serialisierungsverfahren (1) für digitalisierte Datenströme (2) von elektrischen Betriebswerten (3) insbesondere eines elektrischen Umrichters (4), wobei einer digitalen Serialisierungseinheit (9) ein erster digitaler Datenstrom (5) für einen ersten elektrischen Betriebswert (6) und zumindest ein weiterer digitaler Datenstrom (7) für zumindest einen weiteren elektrischen Betriebswert (8) zugeführt wird, wobei der erste und der zumindest eine weitere digitale Datenstrom (5,7) jeweils eine Taktfrequenz (10) aufweist, wobei mittels einer Serialisierung (13) des ersten und des zumindest einen weiteren digitalen Datenstroms (5,7) durch die digitale Serialisierungseinheit (9) ein serialisierter digitaler Datenstrom (11) erzeugt wird, wobei durch Ermittlung einer Anzahl der Taktfrequenzen (10) des ersten und des zumindest einen weiteren digitalen Datenstroms (5,7) eine um die Anzahl der Taktfrequenzen (10) erhöhte Taktfrequenz (12) für den serialisierten digitalen Datenstroms (11) erzeugt wird und wobei von der digitalen Serialisierungseinheit (9) der serialisierte digitale Datenstrom (11) mit den als digitalisierte Betriebswerte (23) ausgebildeten elektrischen Betriebswerten (3,6,8) ausgegeben wird. Weiterhin betrifft die Erfindung eine digitale Serialisierungseinheit (9), welche zur Ausführung des Serialisierungsverfahrens (1) eingerichtet ist, sowie einen elektrischen Umrichter (4) mit der digitalen Serialisierungseinheit (9).

## Beschreibung

Die Erfindung betrifft ein Serialisierungsverfahren digitalisierter Datenströme von elektrischen Betriebswerten elektrischer Umrichter, eine digitale Serialisierungseinheit, welche zur Ausführung des Serialisierungsverfahrens eingerichtet ist sowie einen elektrischen Umrichter mit der digitalen Serialisierungseinheit.

Für den Betrieb von elektrischen Umrichtern werden verschiedene elektrische Betriebswerte, wie beispielsweise Stromistwerte in den einzelnen Wechselspannungsphasen für die Stromregelung eines Wechselrichters in einem Frequenzumrichter, benötigt.

Die genannten Stromistwerte werden oftmals derart ermittelt, dass im Leistungsteil des elektrischen Umrichters eine dem Stromistwert proportionale Spannung an den in den Wechselspannungsphasen angebrachten Shunt-Widerständen gemessen wird. Im Weiteren werden die so ermittelten analogen Stromistwerte für die Stromregelung des elektrischen Umrichters meist mittels eines Sigma-Delta Wandlers als Sigma-Delta Datenstrom zu jeweils einem digitalen 1-Bit Datenstrom gewandelt.

Der Sigma-Delta Datenstrom wird ferner mittels einer Auswerteschaltung, welche beispielsweise in einem ASIC (Application-Specific Integrated Circuit), einem FPGA (Field Programmable Gate Array) oder einem CPLD (Complex Programmable Logic Devices) implementiert ist, gefiltert und so der Stromregelung des elektrischen Umrichters digitalisierte Stromistwerte bereitgestellt.

Die Filterung kann beispielsweise mit einem digitalen Tiefpassfilter zur Reduktion der Datenrate - beispielsweise von 10 MHz auf 10kHz - erfolgen. Die Auswerteschaltung bestimmt einen gemittelten Wert des Sigma-Delta Datenstroms, welcher im Ergebnis der Auswertung den analogen Eingangswert des Sigma-Delta Wandlers repräsentiert.

Üblicherweise können die Shunt-Widerstände technisch vorteilhaft und aufwandsarm in Leistungshalbleitermodule von IGBTs (Insulated-Gate Bipolar Transistor), MOSFETs (Metal Oxide Semiconductor Field-Effect Transistors) bzw. Leistungsdioden integriert werden.

Diese Leistungshalbleitermodule weisen oftmals Halbbrückenschaltungen auf, so dass beispielsweise für eine dreiphasige wechselstromseitige Anwendung des Leistungshalbleitermoduls drei Halbbrückenschaltungen als eine Sechspulse-Brückenschaltung (B6-Brücke) zum Einsatz kommen.

Zur Erhöhung der Gesamtleistung des elektrischen Umrichters werden Leistungshalbleitermodule oft parallelgeschaltet, um auf den Einsatz eines einzelnen, meist kostenintensiven Leistungshalbleitermoduls hoher Leistung verzichten zu können.

Für die Parallelschaltung von zwei oder mehreren Leistungshalbleitermodulen in einem oder in mehreren Umrichtern, somit beispielsweise für die Parallelschaltung von Leistungshalbleitermodulen in Halbbrückenschaltungen zur Erzeugung von Teilphasen einer Wechselspannungsphase, wird für jede Teilphase mittels eines Sigma-Delta-Wandler aus gemessenen analogen Teilstromistwerten ein digitalisierter Sigma-Delta Datenstrom mit digitalisierten Teilstromistwerten zur Weiterverarbeitung der vormals analogen Teilstromistwerte erzeugt.

Diese einzelnen digitalisierten Teilstromistwerte werden mittels des digitalisierten Sigma-Delta Datenstroms an die Auswerteschaltung zur Weiterverarbeitung der Teilstromistwerte für Reglungs- bzw. Steuerungsaufgaben von elektrischen Umrichtern übermittelt.

Die Vorgehensweise erfordert eine recht aufwändige Lösung insbesondere bzgl. der Übermittlung der aus der Parallelschaltung der Leistungshalbleitermodule - und damit deren jeweiliger Halbbrückenmodule - resultierenden Sigma-Delta Datenströme zur Auswerteschaltung, wobei hier das Vorhalten einer ausreichenden Anzahl von Eingängen an der Auswerteschaltung für die jeweiligen Sigma-Delta Datenströme der einzelnen Teilphasen notwendig ist.

Je nach Anzahl der parallelgeschalteten Leistungshalbleitermodule kommt eine jeweils spezifische Lösung zum Einsatz, was meist mit einem hohem Entwicklungs- bzw. Implementierungsaufwand verbunden ist.

Zusätzlich muss noch der in jeder der Wechselspannungsphasen gemessene Gesamtstrom - inklusive AD-Wandlung mittels der Sigma-Delta-Wandlung und Übertragung an die Auswerteschaltung analog zu den einzelnen Teilströmen in den Teilphasen der Wechselspannungsphase - sicher ermittelt, in diesem Fall gemessen werden, was einen weiteren Aufwand sowohl bzgl. der Entwicklung bzw. Implementierung, wie auch bzgl. des Bedarfs an weiteren Bauelementen, z.B. Shunt-Widerständen zur Messung des Gesamtstromes, zur Folge hat.

Alternativ können pro Teil-Wechselspannungsphase die dem jeweiligen Stromistwert proportionalen, am Shunt-Widerstand gemessenen Spannungswerte als Analogwerte bestimmt und mittels einer Operationsverstärkerschaltung zu einem aggregierten Spannungswert der Wechselspannungsphase addiert werden. Diese Lösung ist jedoch elektrisch störungsanfällig und mit Genauigkeitseinbußen für den im Ergebnis zu ermittelnden Stromistwert verbunden.

Auch können die an den jeweiligen Shunt-Widerständen der Teil-Wechselspannungsphasen gemessenen Spannungswerte jeweils einzeln in Sigma-Delta Dataströme konvertiert und im Weiteren mittels einer Additionsschaltung zu einem aggregierten Spannungswert für die entsprechende Wechselspannungsphase zusammengefasst werden. Jedoch ist dieses Vorgehen oft mit einer Einbuße an Genauigkeit bzgl. der maximal möglichen Auflösung für die Spannungswerte und im Ergebnis für den daraus resultierenden Stromistwert verbunden.

Der Erfindung liegt die Aufgabe zugrunde, ein Serialisierungsverfahren, eine digitale Serialisierungseinheit mit dem Serialisierungsverfahren und einen Umrichter mit der digitalen Serialisierungseinheit vorzuschlagen, um eine gegenüber dem Stand der Technik verbesserte Übertragung von digitalisierten Datenströmen elektrischer Betriebswerte bereitzustellen.

Die Aufgabe wird durch ein Serialisierungsverfahren mit den in Anspruch 1 angegebenen Merkmalen, eine digitale Serialisierungseinheit mit den in Anspruch 12 angegebenen Merkmalen sowie einem elektrischen Umrichter mit den in Anspruch 14 angegebenen Merkmalen gelöst.

Für die Lösung der Aufgabe wird ein Serialisierungsverfahren für digitalisierte Datenströme von elektrischen Betriebswerten, insbesondere eines elektrischen Umrichters, vorgeschlagen, wobei einer digitalen Serialisierungseinheit ein erster digitaler Datenstrom für einen ersten elektrischen Betriebswert und zumindest ein weiterer digitaler Datenstrom für zumindest einen weiteren elektrischen Betriebswert zugeführt wird, wobei der erste und der zumindest eine weitere digitale Datenstrom jeweils eine Taktfrequenz aufweist, wobei mittels einer Serialisierung des ersten und des zumindest einen weiteren digitalen Datenstroms durch die digitale Serialisierungseinheit ein serialisierter digitaler Datenstrom erzeugt wird, wobei durch Ermittlung einer Anzahl der Taktfrequenzen des ersten und des zumindest einen weiteren digitalen Datenstroms eine um die Anzahl der Taktfrequenzen erhöhte Taktfrequenz für den serialisierten digitalen Datenstroms erzeugt wird und wobei von der digitalen Serialisierungseinheit der serialisierte digitale Datenstrom mit den als digitalisierte Betriebswerte ausgebildeten elektrischen Betriebswerten ausgegeben wird.

Durch die Serialisierung von digitalen Datenströme mittels eines serialisierten digitalen Datenstroms ist eine effiziente und aufwandsarme Datenübertragung von mehreren digitalisierten Betriebswerten bzw. digitalisierten Teilbetriebswerten - welche beispielsweise jeweils aus analogen Betriebswerten bzw. analogen Teilbetriebswerten erzeugt wurden - möglich, wobei der serialisierte digitale Datenstrom neben den einzelnen digitalisierten Betriebswerten auch einen digitalisierten Gesamtbetriebswert als eine Summe der digitalisierten Teilbetriebswerte - somit als Maß eines elektrischen Gesamtbetriebswerts - aufweisen kann, was in vorteilhafter Weise eine sichere Ermittlung und Übermittlung des Gesamtbetriebswerts zur Folge hat und demnach auf eine zusätzliche Messung des analogen elektrischen Gesamtbetriebswerts verzichtet werden kann.

Mittels der Zusammenfassung der einzelnen digitalisierten Datenströme zu dem serialisierten digitalen Datenstrom kann auf eine Mehrzahl von einzelnen Übertragungswegen für die jeweils einzelnen digitalisierten Datenströme, ausgehen von den meist aus analogen Betriebswerten oder Teilbetriebswerten digitalisierten Betriebswerten oder digitalisierten Teilbetriebswerten für die Regelungs- bzw. Steuerungseinheiten elektrischer Geräte - insbesondere elektrischer Umrichter - verzichtet werden, indem die jeweiligen digitalisierten Betriebswerte oder digitalisierten Teilbetriebswerte als summierter digitaler Gesamtbetriebswert mittels nur eines digitalisierten Übertragungswegs via einer Signalleitung übertragen werden.

Vorteilhafte Ausgestaltungsformen des Serialisierungsverfahrens sind in den abhängigen Ansprüchen angegeben.

Bei einer ersten vorteilhaften Ausgestaltungsform des Serialisierungsverfahrens wird die Serialisierung des ersten und des zumindest einen weiteren digitalen Datenstroms mittels einer zeitlich versetzten Ausführung der jeweiligen Taktfrequenzen des ersten und des zumindest einen weiteren digitalen Datenstroms durchgeführt.

Die zeitlich versetzte Ausführung der jeweiligen Taktfrequenzen bietet den Vorteil, dass eine Streckung der Datenübertragung des ersten und des zumindest einen weiteren digitalen Datenstroms während der Serialisierung der digitalisierten Datenströme eine geringere Belastung von elektrischen Störgrößen in Signalleitungen - zur Verbesserung der elektromagnetischen Verträglichkeit (EMV) - insbesondere an Signalausgängen einer zur Serialisierung der digitalisierten Datenströme ausgebildeten Serialisierungseinheit zur Folge hat.

Diese Entlastung in Bezug auf das Auftreten der elektrischen Störgrößen in den Signalleitungen erfolgt beispielsweise ausgehend von der digitalen Serialisierungseinheit über eine Auswerteeinheit zur Auswertung des serialisierten digitalen Datenstroms für die Weiterverarbeitung der digitalisierten Betriebswerte bis hin zu einer Prozessoreinheit für die Ermittlung von Schaltsignalen und die Ansteuerung mittels Treiberschaltungen von Leistungshalbleiterschaltern in elektrischen Umrichtern.

Bei einer weiteren vorteilhaften Ausgestaltungsform des Serialisierungsverfahrens wird die Serialisierung des ersten und des zumindest einen weiteren digitalen Datenstroms mittels einer zeitgleichen Ausführung der jeweiligen Taktfrequenzen des ersten und des zumindest einen weiteren digitalen Datenstroms durchgeführt.

Diese Ausgestaltungsform hat den Vorteil, dass nur ein gleichzeitiger Takt mit den jeweiligen Taktfrequenzen des ersten und des zumindest einen weiteren digitalen Datenstroms für die Ausführung des Serialisierungsverfahrens bereitgestellt werden muss, was die Implementierung des Serialisierungsverfahrens erleichtert.

Bei einer weiteren vorteilhaften Ausgestaltungsform des Serialisierungsverfahrens weist der serialisierte digitale Datenstrom neben Informationen über die elektrischen Betriebswerte des ersten und des zumindest einen weiteren elektrischen Betriebswerts weitere Informationen über eine Betriebswertsumme aus dem ersten und dem zumindest einen weiteren elektrischen Betriebswert auf.

Besonders vorteilhaft ist das Serialisierungsverfahren demnach für die Summierung von als elektrische Betriebswerte ausgebildeten elektrischen Teilbetriebswerten, welche mittels der Betriebswertsumme zu einem elektrischen Gesamtbetriebswert zusammengefasst werden.

Beispielsweise können damit elektrische Teilbetriebswerte von parallelgeschalteten Leistungshalbleitermodulen eines oder mehrerer Umrichter, wie Teilströme in Teilphasen einer elektrischen Phase, und der aus den Teilbetriebswerten aufsummierte Gesamtbetriebswert, wie ein aus den Teilströmen gebildeter Gesamtstrom der elektrischen Phase, zur Weiterverarbeitung in einem Reglungs- oder Steuerungsalgorithmus für den oder die Umrichter an eine dafür ausgebildete Reglungs- bzw. Steuerungseinheit übertragen wird.

Bei einer weiteren vorteilhaften Ausgestaltungsform des Serialisierungsverfahrens weisen der erste digitale Datenstrom und der zumindest eine weitere digitale Datenstrom als jeweilige Taktfrequenz eine gleiche Taktfrequenz auf.

Die Wahl der gleichen Taktfrequenz der digitalisierten Datenströme hat den Vorteil, dass eine gleichmäßige Gewichtung der digitalisierten Betriebswerte bei der Summierung zu einem digitalisierten Gesamtbetriebswert - also die Summierung der Anteile der einzelnen elektrischen Betriebswerte als Teilbetriebswerte zur Betriebswertsumme des elektrischen Gesamtbetriebswertes - erfolgt.

Ein Abdriften der digitalisierten Betriebswerte, welche die elektrischen Betriebswerte als Teilbetriebswerte repräsentieren, und damit insbesondere eine Verzerrung dieser elektrischen Betriebswerte im elektrischen Gesamtbetriebswert, wird so im Wesentlichen vermieden.

Bei einer weiteren vorteilhaften Ausgestaltungsform des Serialisierungsverfahrens wird der erste und der zumindest eine weitere digitale Datenstrom mittels einer Sigma-Delta-Wandlung aus Analogwerten der elektrischen Betriebswerte erzeugt werden.

Die Erzeugung von 1Bit-digitalen Datenströmen aus Analogwerten elektrischer Betriebswerte mittels der Sigma-Delta-Wandlung kann in vorteilhafter Weise den ersten und zumindest einen weiteren digitalen Datenstrom für die Verarbeitung zu dem serialisierten digitalen Datenstrom bereitstellen.

Die im Rahmen des Serialisierungsverfahrens eingesetzte Sigma-Delta-Wandlung zur Analog-Digitalwandlung der elektrischen Betriebswerte zu digitalisierten Betriebswerten hat den Vorteil, dass diese Betriebswerte in Bezug auf die Signalführung dieser Betriebswerte galvanisch getrennt sind. Damit kann die spätere Auswertung des serialisierten digitalen Datenstroms zur Weiterverarbeitung der elektrischen Betriebswerte bzw. der digitalisierten Betriebswerte i.V.m. dem elektrischen Gesamtbetriebswert bzw. dem digitalisierten Gesamtbetriebswert für die Erzeugung von Steuersignalen und die Ansteuerung von Treibern der Leistungshalbleiterschalter mittels Anwendung verschiedener Filter auf dem serialisierten digitalen Datenstrom genauer und schneller erfolgen.

Bei einer weiteren vorteilhaften Ausgestaltungsform des Serialisierungsverfahrens sind die elektrischen Betriebswerte als Stromwert oder als ein zu einem Stromwert korrespondierenden elektrischen Wert, insbesondere einem Spannungswert, ausgebildet.

Das Messen von Strömen ist eine wesentliche Voraussetzung, um beispielsweise elektrische Umrichter in Antriebssystemen oder Energieverteilungssystemen mittels Reglungs- bzw. Steuerungsalgorithmen zu betreiben. Dabei können Ströme indirekt über einen Spannungsabfall an einem vom Strom durchflossenen elektrischen Widerstand gemessen werden. Für das Serialisierungsverfahren mit dem Einsatz in elektrischen Umrichtern sind können demnach auch Spannungen als analoge elektrische Betriebswerte vorteilhaft erfasst, digitalisiert und in den digitalisierten seriellen Datenstrom überführt werden.

Bei einer weiteren vorteilhaften Ausgestaltungsform des Serialisierungsverfahrens werden der erste elektrische Betriebswert und der zumindest eine weitere elektrische Betriebswert als Stromwerte von einer Stromerfassungsvorrichtung, insbesondere mittels eines Shunt-Widerstands oder eines Hall-Sensors oder eines GMR-Sensors, erfasst.

Bei einer weiteren vorteilhaften Ausgestaltungsform des Serialisierungsverfahrens entspricht der erste elektrische Betriebswert als elektrischer Teilbetriebswert einem ersten Teilstrom eines ersten Leistungshalbleitermoduls des elektrischen Umrichters für eine erste Teilphase einer ersten Phase eines elektrischen Netzes und entspricht der zumindest eine weitere elektrische Betriebswert als weiterer elektrischer Teilbetriebswert einem zweiten Teilstrom eines mit dem ersten Leistungshalbleitermodul an einem Gleichspannungskreis parallelgeschalteten weiteren Leistungshalbleitermoduls des elektrischen Umrichters für eine zweite Teilphase der ersten Phase des elektrischen Netzes.

Diese Ausgestaltung eignet sich in vorteilhafter Weise für Parallelschaltungen von Leistungshalbleitermodulen und deren Betrieb, insbesondere in elektrischen Umrichtern, wobei einzelne elektrische Betriebswerte der Leistungshalbleitermodule, wie Teilströme in Teilphasen der Phase des elektrischen Netzes, jeweils zuerst als analoge Betriebswerte in digitale Betriebswerte überführt werden und im Weiteren aus den so digitalisierten Betriebswerten der serialisierte digitale Datenstrom - mit dem digitalisierten Gesamtbetriebswert als Maß des elektrischen Gesamtbetriebswerts - erzeugt wird.

Bei einer weiteren vorteilhaften Ausgestaltungsform des Serialisierungsverfahrens werden mittels einer Auswerteeinheit aus dem serialisierten digitalen Datenstrom die digitalisierten Betriebswerte - welche mit den elektrischen Betriebswerten und/oder deren Betriebswertsumme korrelieren - in Regelungswerte für eine Prozessoreinheit überführt.

In die Auswerteeinheit geht - im Gegensatz zu herkömmlichen Lösungen mit den einzelnen digitalisierten Datenströmen der jeweiligen Betriebswerte - nur der serialisierte digitalisierte Datenstrom ein, welcher neben den Informationen über die einzelnen elektrischen Betriebswerte auch Informationen zum elektrischen Gesamtbetriebswert enthält. Für die Prozessoreinheit, mittels der beispielsweise für die Leistungshalbleitermodule elektrischer Umrichter Steuersignale erzeugt werden, übermittelt die Auswerteeinheit beispielsweise Istwerte der elektrischen Betriebswerte und/oder des elektrischen Gesamtbetriebswerts.

Auf eine Erweiterung der beispielsweise als ASIC oder FPGA ausgebildeten Auswerteeinheit, welche bereits in elektrischen Umrichtern ohne Parallelschaltung der Leistungshalbleitermodule für die Weiterverarbeitung von digitalisierten Betriebswerten eingesetzt wird, kann in Bezug auf zusätzliche Dateneingänge - wie sie bei der Parallelschaltung der Leistungshalbleitermodule vermeintlich notwendig wären - verzichtet werden, weil für die Aufnahme der digitalisierten Betriebswerte in Form des serialisierten digitalen Datenstroms pro jeweiliger Phase des elektrischen Netzes, insbesondere in Drehstromnetzen, nur ein Dateneingang der Auswerteeinheit belegt werden muss.

Im Gegensatz zur Nutzung von herkömmlichen Verfahren der Summierung von digitalisierten Betriebswerten, wie dem einer digitalen Additionsschaltungen, können so mit dem erfindungsgemäßen Serialisierungsverfahren Auflösungsverluste der einzelnen Betriebswerte, wie auch des Gesamtbetriebswerts, vermieden werden.

Bei einer weiteren vorteilhaften Ausgestaltungsform des Serialisierungsverfahrens werden die Regelungswerte von der Auswerteeinheit an die Prozessoreinheit insbesondere zur Reglung des elektrischen Umrichters übergeben.

Die mit dem serialisierten digitalisiertem Datenstrom vorgehaltenen Betriebswerte und/oder Gesamtbetriebswerte werden von der Auswerteeinheit an die Prozessoreinheit derart übergeben, dass sie beispielsweise als Stromistwerte für eine Drehzahl-/ Drehmomentregelung oder allgemein für eine Stromregelung im elektrischen Umrichter eines Antriebssystems eingesetzt werden.

Für die Lösung der Aufgabe wird ebenfalls eine digitale Serialisierungseinheit vorgeschlagen, welche zur Ausführung des erfindungsgemäßen Serialisierungsverfahrens eingerichtet ist.

Die digitale Serialisierungseinheit zur Ausführung des Serialisierungsverfahrens kann in vorteilhafter Weise kostengünstig in herkömmlich programmierbaren Bausteinen, wie eines ASIC, FPGA oder CPLD, eingerichtet sein.

Durch eine flexibel auslegbare Anschaltung bzw. Verschaltung der digitalen Serialisierungseinheit und der einfachen Programmierbarkeit im Zuge der Implementierung des Serialisierungsverfahrens, sind über die genannten Messanordnungen und Einsatzgebiete zur Erfassung von Strom und Spannung die Erfassung weiterer Betriebsgrößen denkbar, wie z.B. für eine Temperaturerfassung, eine Drehzahlerfassung oder eine Drehmomenterfassung.

Dazu ist der Begriff "elektrische Betriebsgröße" so zu interpretieren, dass weitere dieser elektrischen Betriebsgrößen zumindest Auswirkung auf den elektrischen Betrieb von elektrischen Bauelementen haben, wie hier beispielsweise von parallelgeschalteten Leistungshalbleitermodulen des elektrischen Umrichters.

Beispielhaft sei die Temperaturerfassung für Leistungshalbleitermodule erwähnt, wobei die Höhe der Temperatur der Leistungshalbleitermodule Einfluss auf das Schaltverhalten dieser Leistungshalbleitermodule und somit auf das elektrische Verhalten der Leistungshalbleitermodule, insbesondere aus Sicht reglungstechnischer Aspekte, haben kann.

Bei einer vorteilhaften Ausgestaltungsform der digitale Serialisierungseinheit umfasst die digitale Serialisierungseinheit eine Auswerteeinheit zur Auswertung des serialisierten digitalen Datenstroms.

Für die Lösung der Aufgabe wird weiterhin ein elektrischer Umrichter mit der erfindungsgemäßen digitalen Serialisierungseinheit vorgeschlagen, wobei der elektrische Umrichter als Teil eines Antriebssystems für einen Betrieb eines elektrischen Motors an einem elektrischen Netz oder als Teil eines Energieversorgungssystems für eine Umrichtung elektrischer Energie in einem elektrischen Netzsystem vorgesehen ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung eines Antriebssystems mit in einem elektrischen Umrichter parallelgeschalteten Leistungshalbleitermodulen und einer erfindungsgemäßen digitalisierten Serialisierungseinheit zur Durchführung des erfindungsgemäßen Serialisierungsverfahrens,
- FIG 2: eine schematische Blockdarstellung des erfindungsgemäßen digitalisierten Serialisierungsverfahrens gemäß FIG 1,
- FIG 3: eine erste schematische Diagrammdarstellung des Serialisierungsverfahrens gemäß FIG 1 oder FIG 2 mit einer ersten Ausführung zeitlicher Abfolgen von Taktfrequenzen digitaler Datenströme für deren Serialisierung,
- FIG 4: eine weitere schematische Diagrammdarstellung des Serialisierungsverfahrens gemäß FIG 1 oder FIG 2 anhand einer weiteren Ausführung zeitlicher Abfolgen von Taktfrequenzen digitaler Datenströme für deren Serialisierung.

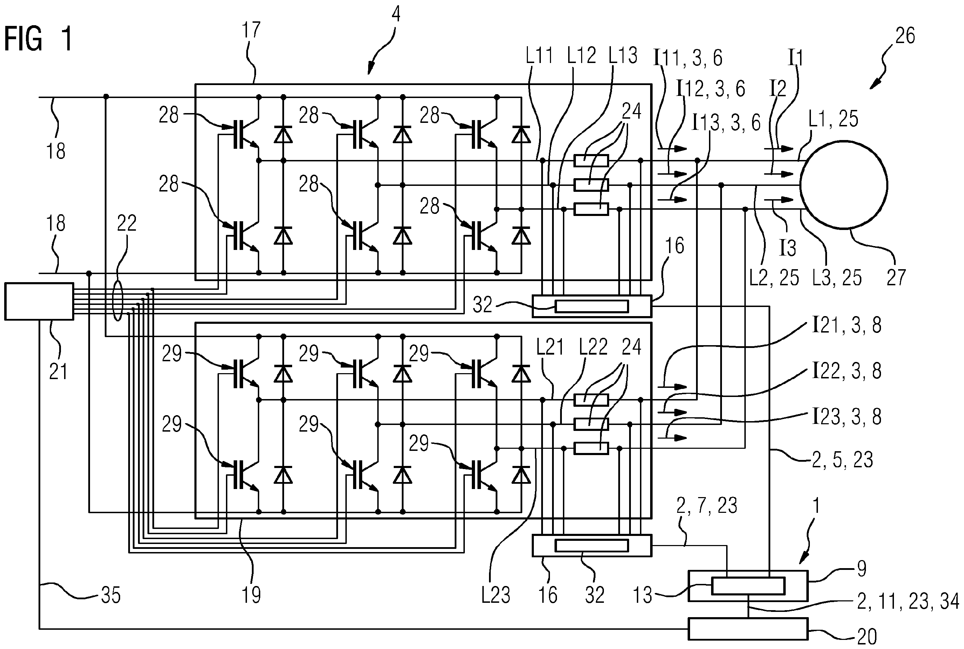

Die FIG 1 zeigt eine schematische Darstellung eines Antriebssystems 26 mit in einem elektrischen Umrichter 4 parallelgeschalteten ersten Leistungshalbleitermodul 17 und weiteren Leistungshalbleitermodul 19 sowie eine erfindungsgemäße digitalisierte Serialisierungseinheit 9 zur Durchführung des erfindungsgemäßen Serialisierungsverfahrens 1.

Die Verfahrensaspekte zur Durchführung des erfindungsgemäßen Serialisierungsverfahrens 1, welche mit FIG 1 beschrieben sind, beziehen sich auf einen Betriebsfall der Leistungshalbleitermodule 17,19 des elektrischen Umrichters 4.

Die Leistungshalbleitermodule 17,19 sind jeweils als Brückenmodule - hier beispielhaft Brückenmodule in einer Sechspulse-Brückenschaltung - mit ersten Leistungshalbleiterschaltern 28 des ersten Leistungshalbleitermoduls 17 und Leistungshalbleiterschaltern 29 des weiteren Leistungshalbleitermoduls 19 ausgebildet.

Die Leistungshalbleitermodule 17, 19 sind eingangsseitig mit einem Gleichspannungskreis 18, welcher oft ein Gleichspannungszwischenkreis des beispielsweise als Frequenzumrichter ausgebildeten elektrischen Umrichters 4 ist, elektrisch verbunden.

Das erste Leistungshalbleitermodul 17 ist ausgangsseitig mit einer erste Teilphase L11 einer ersten Phase L1 eines elektrischen Netzes 25, einer ersten Teilphase L12 einer zweiten Phase L2 des elektrischen Netzes 25 und einer ersten Teilphase L13 einer dritten Phase L3 des elektrischen Netzes 25 verbunden.

Das weitere Leistungshalbleitermodul 19 ist ausgangsseitig mit einer zweiten Teilphase L21 der ersten Phase L1 des elektrischen Netzes 25, einer zweiten Teilphase L22 der zweiten Phase L2 des elektrischen Netzes 25 und einer zweiten Teilphase L23 der dritten Phase L3 des elektrischen Netzes 25 verbunden.

Demnach sind die Leistungshalbleitermodule 17,19 im elektrischen Umrichters 4 zwischen eingangsseitig dem Gleichspannungskreis 18 und ausgangsseitig dem elektrischen Netz 25 parallelgeschaltet.

Das elektrische Netz 25 ist über die erste Phase L1, die zweite Phase L2 und die dritte Phase L3 als dreiphasiges Drehstromnetz mit einem elektrischen Motor 27 elektrisch verbunden. Der elektrische Motor 27 ist - wie der elektrische Umrichter 4 - Teil des Antriebssystems 26 und mittels des elektrischen Umrichters 4 betreibbar.

Mittels hier beispielhaft genutzter Shunt-Widerstände 24 werden im Betriebsfall am ersten Leistungshalbleitermodul 17 in den ersten Teilphasen L11,L12,L13 der Phasen L1,L2,L3 des elektrischen Netzes 25 als elektrische Betriebswerte 3 jeweils erste elektrische Betriebswerte 6 in Form eines ersten Teilstroms I11 der ersten Teilphase L11 der ersten Phasen L1 für den ersten Strom I1 in der ersten Phase L1, in Form eines ersten Teilstroms 112 der ersten Teilphase L12 der zweiten Phasen L2 für den zweiten Strom 12 in der zweiten Phase L2 und in Form eines ersten Teilstroms 113 der ersten Teilphase L13 der dritten Phasen L3 für den dritten Strom I3 in der dritten Phase L3 gemessen.

Diese als erste elektrische Betriebswerte 6 gemessenen Teilströme I11,I12,I13 in den Teilphasen L11,L12,L13 am ersten Leistungshalbleitermodul 17 werden in einer Stromerfassungsvorrichtung 16 als elektrische Betriebswerte 3 - hier als analoge Werte - erfasst und mittels einer Sigma-Delta-Wandlung 32 in digitalisierte Datenströme 2 gewandelt. Jeder dieser als erste elektrische Betriebswerte 6 gemessenen Teilströme I11,I12,I13 wird jeweils in erste digitalisierte Datenströme 5 gewandelt.

Ebenfalls mittels beispielhaft genutzter Shunt-Widerstände 24 werden im Betriebsfall am weiteren Leistungshalbleitermodul 19 in den zweiten Teilphasen L21,L22,L23 der Phasen L1,L2,L3 des elektrischen Netzes 25 als elektrische Betriebswerte 3 jeweils weitere elektrische Betriebswerte 8 in Form eines zweiten Teilstroms I21 der zweiten Teilphase L21 der ersten Phasen L1 für den ersten Strom I1 in der ersten Phase L1, in Form eines zweiten Teilstroms I22 der zweiten Teilphase L22 der zweiten Phasen L2 für den zweiten Strom I2 in der zweiten Phase L2 und in Form eines zweiten Teilstroms I23 der zweiten Teilphase L23 der dritten Phasen L3 für den dritten Strom I3 in der dritten Phase L3 gemessen.

Diese als weitere elektrische Betriebswerte 6 gemessenen Teilströme I21,I22,I23 in den Teilphasen L21,L22,L23 am weiteren Leistungshalbleitermodul 19 werden in einer Stromerfassungsvorrichtung 16 als elektrische Betriebswerte 3 - hier als analoge Werte - erfasst und mittels einer Sigma-Delta-Wandlung 32 in digitalisierte Datenströme 2 gewandelt. Jeder dieser als weitere elektrische Betriebswerte 8 gemessenen Teilströme I21,I22,I23 wird jeweils in weitere digitalisierte Datenströme 7 gewandelt.

Sowohl die ersten elektrischen Betriebswerte 6 als erste digitalisierte Datenströme 5 für die ersten Teilströme I11,I12,I13 der ersten Teilphasen L11,L12,L13 der Phasen L1,L2,L3 des elektrischen Netzes 25, wie auch die weiteren elektrischen Betriebswerte 8 als weitere digitalisierte Datenströme 7 für die zweiten Teilströme I21,I22,I23 der zweiten Teilphasen L21,L22, L23 der Phasen L1,L2,L3 des elektrischen Netzes 25, werden jeweils als digitalisierte Betriebswerte 23 der digitalen Serialisierungseinheit 9 zugeführt, welche die Serialisierung 13 aus ersten und weiteren digitalisierten Datenströmen 5,7 mittels des Serialisierungsverfahrens 1 durchführt und einen serialisierten digitalen Datenstrom 11 erzeugt.

Dieser serialisierte digitale Datenstrom 11 als digitalisierter Datenstrom 2 enthält neben den digitalisierten Betriebswerten 23 der einzelnen Teilströme I11,I12,I13,I21,I22,I23 der jeweiligen Teilphasen L11,L12,L13,L21,L22,L23 der Phasen L1,L2,L3 des elektrischen Netzes 25 auch Betriebswertsummen 34 der Ströme I1,I2,I3 in den Phasen L1,L2,L3, welche sich aus den einzelnen Teilströme I11,I12,I13,I21,I22,I23 für die jeweiligen Ströme I1,I2,I3 zusammensetzen.

So setzt sich beispielhaft der erste Strom I1 in der ersten Phase L1 des elektrischen Netzes 25 als Betriebswertsumme 34 zusammen aus dem ersten elektrischen Betriebswert 6 des ersten digitalen Datenstroms 5 in Form des ersten Teilstroms I11 des ersten Stroms I1 in der ersten Teilphase L11 der ersten Phase L1 summiert mit dem weiteren elektrischen Betriebswert 8 des weiteren digitalen Datenstroms 7 in Form des zweiten Teilstroms I21 des ersten Stroms I1 in der zweiten Teilphase L21 der ersten Phase L1.

Diese Vorgehensweis erfolgt für alle elektrischen Betriebswerte 3 bzw. deren digitalisierte Datenströme 2 im Zusammenhang mit der Erzeugung des serialisierten digitalen Datenstroms 11 und der darin enthaltenen Betriebswertsummen 34 ausgehend von den Teilströmen I11,I12,I13,I21,I22,I23 in den Teilphasen L11,L12,L13,L21,L22,L23 für die Ströme I1,L2,I3 der Phasen L1,L2,L3 des elektrischen Netzes 25.

Der serialisierte digitale Datenstrom 11 als digitalisierter Datenstrom 2 mit den digitalisierten Betriebswerten 23 und der Betriebswertsumme 34 wird an eine Auswerteeinheit 20 übermittelt.

Diese Auswerteeinheit 20 entnimmt dem serialisierten digitalen Datenstrom 11 für eine Prozessoreinheit 21 im Ausführungsbeispiel benötigte Stromistwerte aus den Teilströme I11,I12,I13,I21,I22,I23 der Teilphasen L11,L21,L13,L21,L22,L23 bzw. den Ströme I1,I2,I3 der Phasen L1,L2,L3 des elektrischen Netzes 25 und bereitet diese Stromistwerte als Reglungswerte 35 für die Prozessoreinheit 21 derart auf, dass mittels beispielsweise einer Stromreglung entsprechende Steuerungssignale 22 für die jeweiligen Leistungshalbleiterschalter 28,29 der Leistungshalbleitermodule 17,19 des elektrischen Umrichters 4 erzeugbar sind.

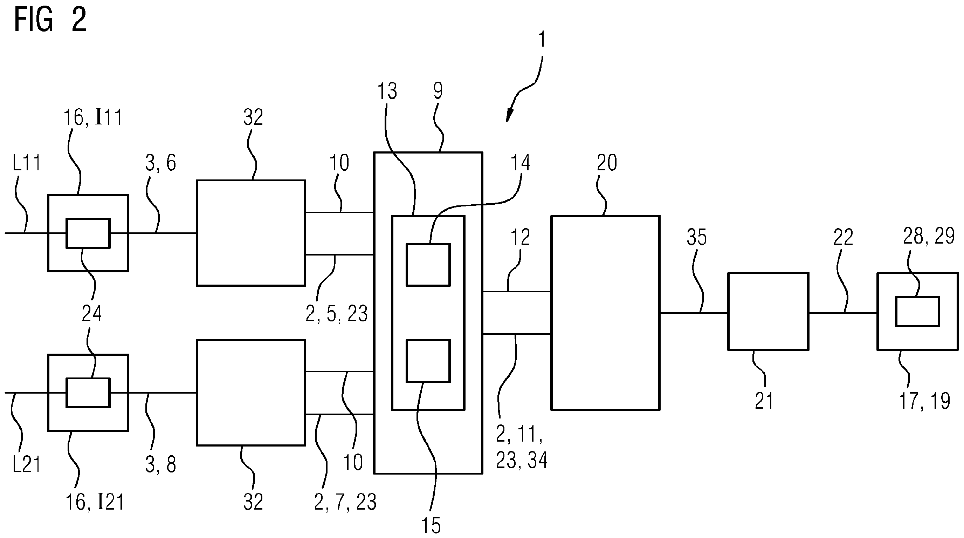

Eine schematische Blockdarstellung des erfindungsgemäßen digitalisierten Serialisierungsverfahrens 1 gemäß FIG 1 wird in FIG 2 dargestellt.

Anknüpfend an die Ausführungen zur Durchführung des Serialisierungsverfahrens 1 nach FIG 1 wird in FIG 2 das Serialisierungsverfahren 1 anhand der beispielhaften Betrachtung der erste Teilphase I11 der ersten Phase des elektrischen Netzes und der zweite Teilphase L21 der ersten Phase des elektrischen Netzes ausführlicher aufgezeigt, welche ausgangsseitig der Leistungshalbleitermodule 17,19 - wie in FIG 1 dargestellt - mit den entsprechenden Leistungshalbleitermodulen 17,19 verbunden sind, wobei das elektrische Netz 25 gemäß FIG 1 neben der ersten Phase L1 weitere Phasen L2,L3 aufweist und die weiteren Phasen L2,L3 aus den jeweils weiteren Teilphasen L12,L13,L21,L22 gebildet werden.

Mittels des Shunt-Widerstands 24 und der Stromerfassungsvorrichtung 16 für die erste Teilphase L11 der ersten Phase des elektrischen Netzes wird als elektrischer Betriebswert 3 in der ersten Teilphase L11 der erste Teilstrom I11 des ersten Stromes der ersten Phase gemessen, wobei der erste Teilstrom I11 den ersten elektrischen Betriebswert 6 repräsentiert.

Die Sigma-Delta-Wandlung 32 erzeugt aus dem ersten elektrischen Betriebswert 6 - hier einem analogen Stromwert - einen digitalisierten Betriebswert 23 - hier einen digitalen 1Bit Stromwert - als digitalisierten Datenstrom 2, ausgebildet in Form des ersten digitalen Datenstroms 5 mit einer Taktfrequenz 10.

Mittels des Shunt-Widerstands 24 und der Stromerfassungsvorrichtung 16 für die zweite Teilphase L21 der ersten Phase des elektrischen Netzes wird als elektrischer Betriebswert 3 in der zweiten Teilphase L21 der zweite Teilstrom I21 des ersten Stromes der ersten Phase gemessen, wobei der zweite Teilstrom I21 den weiteren elektrischen Betriebswert 8 repräsentiert.

Die Sigma-Delta-Wandlung 32 erzeugt aus dem weiteren elektrischen Betriebswert 8 - hier einem analogen Stromwert - einen digitalisierten Betriebswert 23 - hier einen digitalen 1Bit Stromwert - als digitalisierten Datenstrom 2, ausgebildet in Form des Weiteren digitalen Datenstroms 7 mit einer Taktfrequenz 10.

Der erste digitale Datenstrom 5, welcher den ersten elektrischen Betriebswert 6 - den ersten Teilstrom I11 des ersten Stromes der ersten Phase - enthält, und der weitere digitale Datenstrom 7, welcher den weiteren elektrischen Betriebswert 8 - den zweiten Teilstrom I21 des ersten Stromes der ersten Phase - enthält, werden an die digitale Serialisierungseinheit 9 übermittelt, welche die Serialisierung 13 beider digitaler Datenströme 5,7 durch das Serialisierungsverfahren 1 durchführt.

Die Serialisierungseinheit 9 erzeugt den serialisierten digitalen Datenstrom 11 als digitalisierten Datenstrom 2 mittels einer zeitlichen Versetzung 14 der jeweiligen Taktfrequenzen 10 der digitalen Datenströme 5,7 oder mittels einer zeitgleichen Ausführung 15 der jeweiligen Taktfrequenzen 10 der digitalen Datenströme 5,7. Idealerweise sind die jeweiligen Taktfrequenzen 10 der digitalen Datenströme 5,7 gleich.

Der serialisierte digitale Datenstrom 11 weist eine um die Anzahl der Taktfrequenzen 10 des ersten und des einen weiteren digitalen Datenstroms 5,7 erhöhte Taktfrequenz 12 auf.

Ferner weist der serialisierte digitale Datenstrom 11 neben dem ersten digitalen Datenstrom 5, welcher den ersten elektrische Betriebswert 6 repräsentiert, und dem weiteren digitalen Datenstrom 7, welcher den weiteren elektrischen Betriebswert 8 repräsentiert, auch die Betriebswertsumme 34 beider elektrischer Betriebswerte 6,8 auf.

Im Beispiel ist die Betriebswertsumme 34 demnach der erste Strom in der ersten Phase des elektrischen Netzes, welcher sich aus der Summe des ersten Teilstroms I11 des ersten Stromes der ersten Phase und des zweiten Teilstroms I21 des ersten Stromes der ersten Phase bildet.

Die Auswerteeinheit 20 entnimmt dem serialisierten digitalen Datenstrom 11 mit der erhöhten Taktfrequenz für die Prozessoreinheit 21 im Ausführungsbeispiel die entsprechend benötigten Stromistwerte aus dem Teilstrom I11 der Teilphase L11 als ersten elektrischen Betriebswert 6, aus dem Teilstrom I21 der Teilphase L21 als weiteren elektrischen Betriebswert 8 sowie insbesondere den ersten Strom der ersten Phasen des elektrischen Netzes aus der Betriebswertsumme 34, gebildet durch die Summe des ersten elektrischen Betriebswerts 6 und des weiteren elektrischen Betriebswerts 8.

Diese elektrischen Betriebswerte 6,8 sowie die Betriebswertsumme 34 werden als Reglungswerte 35 in Form von Stromistwerten für die Prozessoreinheit 21 derart aufbereitet, dass mittels beispielsweise einer Stromreglung entsprechende Steuerungssignale 22 für die jeweiligen Leistungshalbleiterschalter 28,29 der Leistungshalbleitermodule 17,19 des elektrischen Umrichters erzeugbar sind.

Das Serialisierungsverfahren ist dabei nicht nur auf Stromwerte als elektrische Betriebswerte begrenzt, sondern kann weitere Betriebswerte betreffen, welche einen Einfluss auf das Betriebsverhalten bzw. auf elektrische Größen von elektrischen Geräten haben, insbesondere hier hervorgerufen durch das Parallelschalten von elektronischen Baugruppen, wie die der aufgezeigten Leistungshalbleitermodule 17,19 des elektrischen Umrichters 4 in FIG 1 sowie der Leistungshalbleitermodule 17,19 in FIG 2.

Eine Erfassung und Weiterverarbeitung eines derartigen weiteren Betriebswerts kann beispielsweise eine Temperatur an den Leistungshalbleitermodulen 17,19 betreffen.

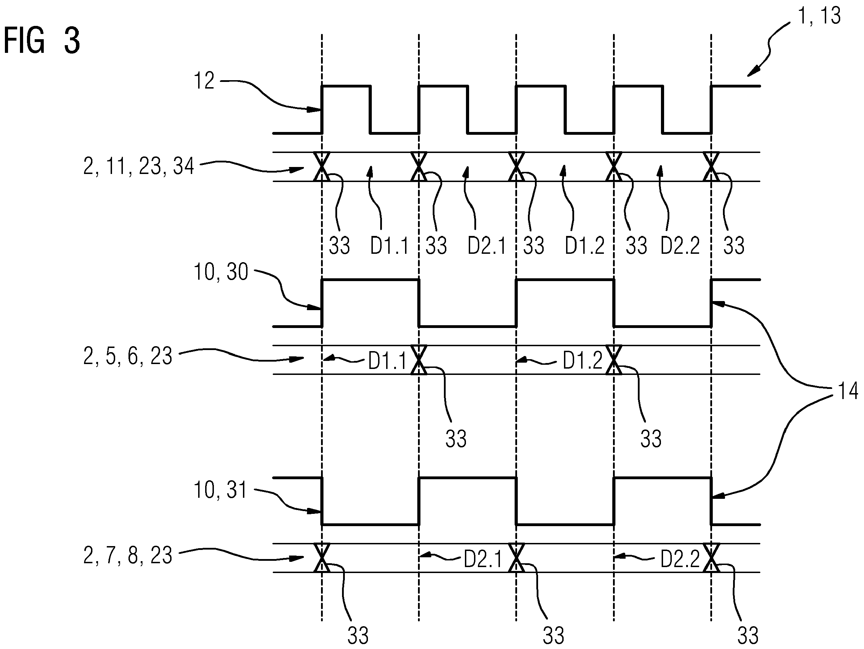

Die FIG 3 zeigt eine erste schematische Diagrammdarstellung des Serialisierungsverfahrens 1 gemäß FIG 1 oder FIG 2 mit einer ersten Ausführung zeitlicher Abfolgen in Form einer zeitlich versetzten Ausführung 14 von Taktfrequenzen 10,30,31 der digitalen Datenströme 2,5,7 für deren Serialisierung 13 als serialisierter digitaler Datenstrom 2,11.

In einem ersten Diagrammteil der schematischen Diagrammdarstellung des Serialisierungsverfahrens 1 gemäß FIG 3 wird der erste digitale Datenstrom 5 als digitalisierter Datenstrom 2 aufgezeigt, wobei der erste digitale Datenstrom 5 den ersten elektrischen Betriebswert 6 - im Ausführungsbeispiel der FIG 1 oder FIG 2 beispielsweise der erste Teilstrom I11 in der ersten Teilphase L11 für den ersten Strom I1 der ersten Phase L1 des elektrischen Netzes 25 - als digitalisierten Betriebswert 23 repräsentiert.

Der erste digitale Datenstrom 5 weist als Taktfrequenz 10 eine erste Taktfrequenz 30 auf.

In einem weiteren Diagrammteil der schematischen Diagrammdarstellung des Serialisierungsverfahrens 1 gemäß FIG 3 wird der weitere digitale Datenstrom 7 als digitalisierter Datenstrom 2 aufgezeigt, wobei der weitere digitale Datenstrom 7 den weiteren elektrischen Betriebswert 8 - im Ausführungsbeispiel der FIG 1 oder FIG 2 den zweiten Teilstrom I21 in der zweiten Teilphase L21 für den ersten Strom I1 der ersten Phase L1 des elektrischen Netzes 25 - als digitalisierten Betriebswert 23 repräsentiert.

Der weitere digitale Datenstrom 7 weist als Taktfrequenz 10 eine weitere Taktfrequenz 31 auf.

Die Taktfrequenzen 10 der ersten Taktfrequenz 30 und der weiteren Taktfrequenz 31 sind im Ausführungsbeispiel der FIG 3 gleich und bilden eine gegeneinander zeitlich versetzte Ausführung 14 aus, so dass die erste Taktfrequenz 30 als 1-Bit Datenstrom dann ein High-Signal aufweist, wenn die weitere Taktfrequenz 31 als 1-Bit Datenstrom ein Low-Signal aufweist, bzw. die erste Taktfrequenz 30 dann ein Low-Signal aufweist, wenn die weitere Taktfrequenz 31 ein High-Signal aufweist.

In einem weiteren Diagrammteil der schematischen Diagrammdarstellung des Serialisierungsverfahrens 1 gemäß FIG 3 wird der mittels der Serialisierung 13 der digitalen Datenströme 5,7 erzeugte serialisierte digitale Datenstrom 11 als digitaler Datenstrom 2 aufgezeigt, wobei der serialisierte digitale Datenstrom 11 die Betriebswertsumme 34 - im Ausführungsbeispiel der FIG 1 oder FIG 2 den ersten Strom I1 in der ersten Phase L1 des elektrischen Netzes 25 als Summe des ersten Teilstroms I11 in der ersten Teilphase L11 und des zweiten Teilstroms I21 in der zweiten Teilphase L21 - als digitalisierten Betriebswert 23 repräsentiert.

Der serialisierte digitale Datenstrom 11 weist eine gegenüber den Taktfrequenzen 10 der ersten Taktfrequenz 30 des ersten digitalen Datenstroms 5 und der weiteren Taktfrequenz 31 des Weiteren digitalen Datenstroms 7 erhöhte Taktfrequenz 12 - in diesem Fall eine doppelte Taktfrequenz als erhöhte Taktfrequenz 12 - auf. Die Anzahl der beiden Taktfrequenzen 10 des ersten und des zumindest einen weiteren digitalen Datenstroms 5,7 ergibt hier die Verdopplung der für den serialisierten digitalen Datenstroms erhöhten Taktfrequenz 12.

Ein Datenübergang des ersten digitalen Datenstroms 5 mit dem ersten elektrischen Betriebswert 6 und des weiteren digitalen Datenstroms 7 mit dem weiteren elektrischen Betriebswert 8 zu dem serialisierten digitalen Datenstrom 11 erfolgt während der Serialisierung 13 mittels Datentransfers D1.1,D1.2,D2.1,D2.2.

Dazu wird bei einem ersten Datentransfer D1.1 der erste digitale Datenstrom 5 für den ersten elektrischen Betriebswert 6 - beispielsweise gemäß FIG 1 der erste Teilstrom I11 der ersten Teilphase L11 der ersten Phase L1 des elektrischen Netzes 25 für den ersten Strom I1 in der ersten Phase L1 - üblicherweise während eines High-Signals der ersten Taktfrequenz 30 ausgelesen und von dem serialisierten digitalen Datenstrom 11, üblicherweise während des High-Signals der erhöhten Taktfrequenz 12, übernommen.

Mit der nachfolgend zeitlich versetzten Ausführung 14 der weiteren Taktfrequenz 31 gegenüber der ersten Taktfrequenz 30 wird bei einem weiteren Datentransfer D2.1 der weitere digitale Datenstrom 7 für den weiteren elektrischen Betriebswert 8 - beispielsweise gemäß FIG 1 der zweite Teilstrom I21 der zweiten Teilphase L21 der ersten Phase L1 des elektrischen Netzes 25 für den ersten Strom I1 in der ersten Phase L1 - üblicherweise während eines High-Signals der weiteren Taktfrequenz 31 ausgelesen und von dem serialisierten digitalen Datenstrom 11, üblicherweise während des High-Signals der erhöhten Taktfrequenz 12, übernommen.

Mit der nachfolgend zeitlich versetzten Ausführung 14 der ersten Taktfrequenz 30 gegenüber der weiteren Taktfrequenz 31 wird bei einem weiteren Datentransfer D1.2 wiederum der erste digitale Datenstrom 5 für den ersten elektrischen Betriebswert 6 - beispielsweise gemäß FIG 1 wiederum der erste Teilstrom I11 der ersten Teilphase L11 der ersten Phase L1 des elektrischen Netzes 25 für den ersten Strom I1 in der ersten Phase L1 - üblicherweise während eines High-Signals der ersten Taktfrequenz 30 ausgelesen und von dem serialisierten digitalen Datenstrom 11, üblicherweise während des High-Signals der erhöhten Taktfrequenz 12, übernommen.

Mit der nachfolgend zeitlich versetzten Ausführung 14 der weiteren Taktfrequenz 31 gegenüber der ersten Taktfrequenz 30 wird bei einem weiteren Datentransfer D2.2 wiederum der weitere digitale Datenstrom 7 für den weiteren elektrischen Betriebswert 8 - beispielsweise gemäß FIG 1 wiederum der zweite Teilstrom I21 der zweiten Teilphase L21 der ersten Phase L1 des elektrischen Netzes 25 für den ersten Strom I1 in der ersten Phase L1 - üblicherweise während eines High-Signals der weiteren Taktfrequenz 31 ausgelesen und von dem serialisierten digitalen Datenstrom 11, üblicherweise während des High-Signals der erhöhten Taktfrequenz 12 übernommen.

Beispielhaft sind die Datentransfers D1.1,D1.2,D2.1,D2.2 Abschnittsweise mit Sperrvermerken 33 versehen, bei denen sich, insbesondere bei einem Flankenwechsel der Taktfrequenzen 10 der erste Taktfrequenz 30 des ersten digitalen Datenstroms 5 bzw. der weiteren Taktfrequenz 31 des weiteren digitalen Datenstroms 7 sowie der erhöhten Taktfrequenz 12 des serialisierten digitalen Datenstroms 11, instabile Zustände während der Datentransfers D1.1,D1.2,D2.1,D2.2 ergeben können und die Datentransfers D1.1,D1.2,D2.1,D2.2 daher während der Sperrvermerke 33 nicht durchgeführt werden.

Mit dem im Ausführungsbeispiel der FIG 3 dargestellten Serialisierungsverfahren 1 ist i.V.m. der Parallelschaltung des ersten mit dem weiteren Leistungshalbleitermoduls 17,19 nach FIG 1 die Erfassung und Serialisierung 13 von elektrischen Betriebswerten 3 der Teilströme I12,I22 in den Teilphasen L12,22 der zweiten Phase L2 des elektrischen Netzes 25 - und deren Überführung in den serialisierten digitalen Datenstrom 11 mit der Betriebswertsumme 34 des zweiten Stromes I2 - sowie von elektrischen Betriebswerten 3 der Teilströme I13,I23 in den Teilphasen L13,23 der dritten Phase L3 des elektrischen Netzes 25 - und deren Überführung in den serialisierten digitalen Datenstrom 11 mit der Betriebswertsumme 34 des dritten Stromes I3 - analog durchzuführen.

Auch können analog dem Ausführungsbeispiel gemäß FIG 3 i.V.m. FIG 1 neben der Parallelschaltung des ersten und des weiteren Leistungshalbleitermoduls 17,19 z.B. durch eine zusätzliche Parallelschaltung weiterer Leistungshalbleitermodule auch weitere elektrische Betriebswerte erfasst und in dem serialisierten digitalen Datenstrom 11 serialisiert werden.

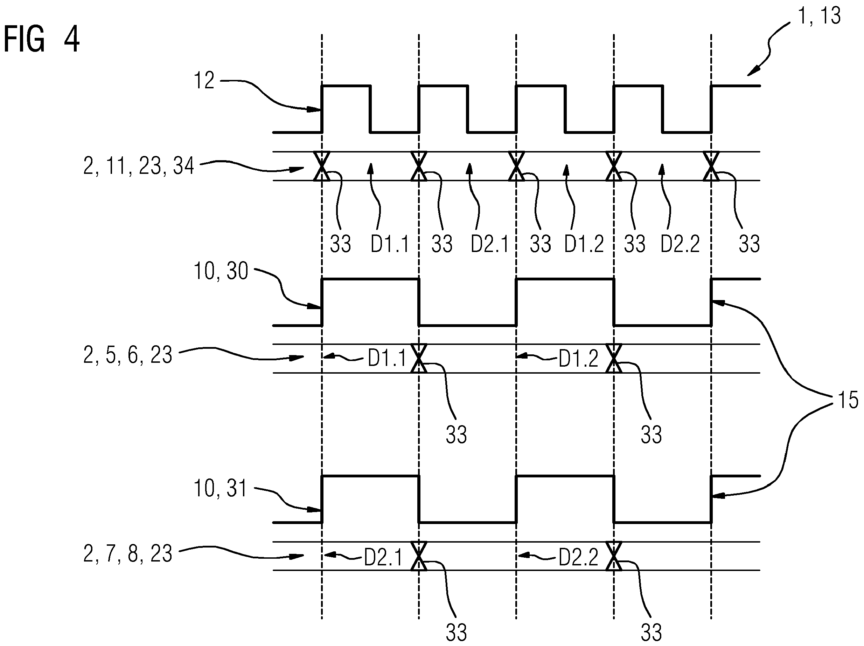

Die FIG 4 zeigt eine weitere schematische Diagrammdarstellung des Serialisierungsverfahrens 1 gemäß FIG 1 und FIG 2 anhand einer zeitgleichen Ausführung 15 von Taktfrequenzen 10,30,31 der digitalen Datenströme 2,5,7 mit deren Serialisierung 13 zu dem serialisierten digitalen Datenstrom 2,11.

In einem ersten Diagrammteil der schematischen Diagrammdarstellung des Serialisierungsverfahrens 1 gemäß FIG 4 wird der erste digitale Datenstrom 5 als digitalisierter Datenstrom 2 aufgezeigt, wobei der erste digitale Datenstrom 5 den ersten elektrischen Betriebswert 6 - im Ausführungsbeispiel der FIG 1 oder FIG 2 beispielsweise der erste Teilstrom I11 in der ersten Teilphase L11 für den ersten Strom I1 der ersten Phase L1 des elektrischen Netzes 25 - als digitalisierten Betriebswert 23 repräsentiert.

Der erste digitale Datenstrom 5 weist als Taktfrequenz 10 eine erste Taktfrequenz 30 auf.

In einem weiteren Diagrammteil der schematischen Diagrammdarstellung des Serialisierungsverfahrens 1 gemäß FIG 4 wird der weitere digitale Datenstrom 7 als digitalisierter Datenstrom 2 aufgezeigt, wobei der weitere digitale Datenstrom 7 den weiteren elektrischen Betriebswert 8 - im Ausführungsbeispiel der FIG 1 oder FIG 2 den zweiten Teilstrom I21 in der zweiten Teilphase L21 für den ersten Strom I1 der ersten Phase L1 des elektrischen Netzes 25 - als digitalisierten Betriebswert 23 repräsentiert.

Der weitere digitale Datenstrom 7 weist als Taktfrequenz 10 eine weitere Taktfrequenz 31 auf.

Die Taktfrequenzen 10 der ersten Taktfrequenz 30 und der weiteren Taktfrequenz 31 sind im Ausführungsbeispiel der FIG 4 gleich und bilden miteinander eine zeitgleiche Ausführung 15 aus, so dass die erste Taktfrequenz 30 und die weitere Taktfrequenz 31 jeweils als 1-Bit Datenstrom zeitgleich ein High-Signal und ein Low-Signal aufweisen.

In einem weiteren Diagrammteil der schematischen Diagrammdarstellung des Serialisierungsverfahrens 1 wird der mittels der Serialisierung 13 der digitalen Datenströme 5,7 erzeugte serialisierte digitale Datenstrom 11 als digitaler Datenstrom 2 aufgezeigt, wobei der serialisierte digitale Datenstrom 11 die Betriebswertsumme 34 - im Ausführungsbeispiel der FIG 1 den ersten Strom I1 in der ersten Phase L1 des elektrischen Netzes 25 als Summe des ersten Teilstroms I11 in der ersten Teilphase L11 und des zweiten Teilstroms I21 in der zweiten Teilphase L21 - als digitalisierten Betriebswert 23 repräsentiert.

Der serialisierte digitale Datenstrom 11 weist eine gegenüber den Taktfrequenzen 10 der ersten Taktfrequenz 30 des ersten digitalen Datenstroms 5 und der weiteren Taktfrequenz 31 des Weiteren digitalen Datenstroms 7 erhöhte Taktfrequenz 12 - in diesem Fall eine doppelte Taktfrequenz als erhöhte Taktfrequenz 12 - auf. Die Anzahl der beiden Taktfrequenzen 10 des ersten und des zumindest einen weiteren digitalen Datenstroms 5,7 ergibt hier die Verdopplung der für den serialisierten digitalen Datenstroms erhöhten Taktfrequenz 12.

Ein Datenübergang des ersten digitalen Datenstroms 5 mit dem ersten elektrischen Betriebswert 6 und des weiteren digitalen Datenstroms 7 mit dem weiteren elektrischen Betriebswert 8 erfolgt während der Serialisierung 13 mittels Datentransfers D1.1,D1.2,D2.1,D2.2.

Dazu wird bei einem ersten Datentransfer D1.1 der erste digitale Datenstrom 5 mit dem ersten elektrischen Betriebswert 6 - beispielsweise gemäß FIG 1 der erste Teilstrom I11 der ersten Teilphase L11 der ersten Phase L1 des elektrischen Netzes 25 für den ersten Strom I1 in der ersten Phase L1 - üblicherweise während eines High-Signals der ersten Taktfrequenz 30 ausgelesen und von dem serialisierten digitalen Datenstrom 11, üblicherweise während des High-Signals der erhöhten Taktfrequenz 12, übernommen.

Durch die zeitgleiche Ausführung 15 der weiteren Taktfrequenz 31 und der ersten Taktfrequenz 30 wird bei einem weiteren Datentransfer D2.1 der weitere digitale Datenstrom 7 mit dem weiteren elektrischen Betriebswert 8 - beispielsweise gemäß FIG 1 der zweite Teilstrom I21 der zweiten Teilphase L21 der ersten Phase L1 des elektrischen Netzes 25 für den ersten Strom I1 in der ersten Phase L1 - üblicherweise während eines High-Signals der weiteren Taktfrequenz 31 ausgelesen und von dem serialisierten digitalen Datenstrom 11, üblicherweise während des High-Signals der erhöhten Taktfrequenz 12 und zumindest eine Taktperiode der erhöhten Taktfrequenz 12 nach Übernahme des ersten digitalen Datenstroms 5 mit dem ersten elektrischen Betriebswert 6 durch den serialisierten digitalen Datenstrom 11 des vorherigen ersten Datentransfers D1.1, vom serialisierten digitalen Datenstrom 11 des weiteren Datentransfers D2.1 übernommen.

Mit der nachfolgend zeitgleichen Ausführung 15 der ersten Taktfrequenz 30 und der weiteren Taktfrequenz 31 wird bei einem weiteren Datentransfer D1.2 wiederum der erste digitale Datenstrom 5 mit dem ersten elektrischen Betriebswert 6 - beispielsweise gemäß FIG 1 wiederum der erste Teilstrom I11 der ersten Teilphase L11 der ersten Phase L1 des elektrischen Netzes 25 für den ersten Strom I1 in der ersten Phase L1 - üblicherweise während eines High-Signals der ersten Taktfrequenz 30 ausgelesen und von dem serialisierten digitalen Datenstrom 11, üblicherweise während des High-Signals der erhöhten Taktfrequenz 12, übernommen.

Mit der nachfolgend zeitgleichen Ausführung 15 der weiteren Taktfrequenz 31 und der weiteren Taktfrequenz 30 wird bei einem weiteren Datentransfer D2.2 wiederum der weitere digitale Datenstrom 7 mit dem weiteren elektrischen Betriebswert 8 - beispielsweise gemäß FIG 1 wiederum der zweite Teilstrom I21 der zweiten Teilphase L21 der ersten Phase L1 des elektrischen Netzes 25 für den ersten Strom I1 in der ersten Phase L1 - üblicherweise während eines High-Signals der weiteren Taktfrequenz 31 ausgelesen und von dem serialisierten digitalen Datenstrom 11, üblicherweise während des High-Signals der erhöhten Taktfrequenz 12, zumindest eine Taktperiode nach dem Übernehmen des ersten digitalen Datenstroms 5 mit dem ersten elektrischen Betriebswert 6 durch den serialisierten digitalen Datenstrom 11 des vorherigen weiteren Datentransfers D1.2, vom serialisierten digitalen Datenstrom 11 des weiteren Datentransfers D2.2 übernommen.

Beispielhaft sind die Datentransfers D1.1,D1.2,D2.1,D2.2 Abschnittsweise mit Sperrvermerken 33 versehen, bei denen sich, insbesondere bei einem Flankenwechsel der Taktfrequenzen 10 der erste Taktfrequenz 30 des ersten digitalen Datenstroms 5 bzw. der weiteren Taktfrequenz 31 des weiteren digitalen Datenstroms 7 sowie der erhöhten Taktfrequenz 12 des serialisierten digitalen Datenstroms 11, instabile Zustände während der Datentransfers D1.1,D1.2,D2.1,D2.2 ergeben können und die Datentransfers D1.1,D1.2,D2.1,D2.2 daher während der Sperrvermerke 33 nicht durchgeführt werden.

Mit dem im Ausführungsbeispiel der FIG 4 dargestellten Serialisierungsverfahren 1 ist i.V.m. der Parallelschaltung des ersten mit dem weiteren Leistungshalbleitermoduls 17,19 nach FIG 1 die Erfassung und Serialisierung 13 von elektrischen Betriebswerten 3 der Teilströme I12,I22 in den Teilphasen L12,22 der zweiten Phase L2 des elektrischen Netzes 25 - und deren Überführung in den serialisierten digitalen Datenstrom 11 mit der Betriebswertsumme 34 des zweiten Stromes I2 - sowie von elektrischen Betriebswerten 3 der Teilströme I13,I23 in den Teilphasen L13,23 der dritten Phase L3 des elektrischen Netzes 25 - und deren Überführung in den serialisierten digitalen Datenstrom 11 mit der Betriebswertsumme 34 des dritten Stromes I3 - analog durchzuführen.

Auch können analog dem Ausführungsbeispiel gemäß FIG 4 i.V.m. FIG 1 neben der Parallelschaltung des ersten und des weiteren Leistungshalbleitermoduls 17,19 z.B. durch eine zusätzliche Parallelschaltung weiterer Leistungshalbleitermodule auch weitere elektrische Betriebswerte erfasst und in dem serialisierten digitalen Datenstrom 11 serialisiert werden.

## Patentansprüche

1. Serialisierungsverfahren (1) für digitalisierte Datenströme (2) von elektrischen Betriebswerten (3) insbesondere eines elektrischen Umrichters (4), wobei
- einer digitalen Serialisierungseinheit (9) ein erster digitaler Datenstrom (5) für einen ersten elektrischen Betriebswert (6) und zumindest ein weiterer digitaler Datenstrom (7) für zumindest einen weiteren elektrischen Betriebswert (8) zugeführt wird,
- der erste und der zumindest eine weitere digitale Datenstrom (5,7) jeweils eine Taktfrequenz (10) aufweist,
- mittels einer Serialisierung (13) des ersten und des zumindest einen weiteren digitalen Datenstroms (5,7) durch die digitale Serialisierungseinheit (9) ein serialisierter digitaler Datenstrom (11) erzeugt wird,
- durch Ermittlung einer Anzahl der Taktfrequenzen (10) des ersten und des zumindest einen weiteren digitalen Datenstroms (5,7) eine um die Anzahl der Taktfrequenzen (10) erhöhte Taktfrequenz (12) für den serialisierten digitalen Datenstroms (11) erzeugt wird und
- von der digitalen Serialisierungseinheit (9) der serialisierte digitale Datenstrom (11) mit den als digitalisierte Betriebswerte (23) ausgebildeten elektrischen Betriebswerten (3,6,8) ausgegeben wird.

2. Serialisierungsverfahren (1) nach Anspruch 1, wobei die Serialisierung (13) des ersten und des zumindest einen weiteren digitalen Datenstroms (5,7) mittels einer zeitlich versetzten Ausführung (14) der jeweiligen Taktfrequenzen (10) des ersten und des zumindest einen weiteren digitalen Datenstroms (5,7) durchgeführt wird.

3. Serialisierungsverfahren (1) nach Anspruch 1, wobei die Serialisierung (13) des ersten und des zumindest einen weiteren digitalen Datenstroms (5,7) mittels einer zeitgleichen Ausführung (15) der jeweiligen Taktfrequenzen (10) des ersten und des zumindest einen weiteren digitalen Datenstroms (5,7) durchgeführt wird.

4. Serialisierungsverfahren (1) nach einem der vorhergehenden Ansprüche, wobei der serialisierte digitale Datenstrom (11) neben Informationen über die elektrischen Betriebswerte (3) des ersten und des zumindest einen weiteren elektrischen Betriebswerts (6,8) weitere Informationen über eine Betriebswertsumme (34) aus dem ersten und dem zumindest einen weiteren elektrischen Betriebswert (6,8) aufweist.

5. Serialisierungsverfahren (1) nach einem der vorhergehenden Ansprüche, wobei der erste digitale Datenstrom (5) und der zumindest eine weitere digitale Datenstrom (7) als jeweilige Taktfrequenz (10) eine gleiche Taktfrequenz aufweisen.

6. Serialisierungsverfahren (1) nach einem der vorhergehenden Ansprüche, wobei der erste und der zumindest eine weitere digitale Datenstrom (5,7) mittels einer Sigma-Delta-Wandlung (32) aus Analogwerten der elektrischen Betriebswerte (3,6,8) erzeugt werden.

7. Serialisierungsverfahren (1) nach einem der vorhergehenden Ansprüche, wobei die elektrischen Betriebswerte (3,6,8) als Stromwert oder als ein zu einem Stromwert korrespondierenden elektrischen Wert, insbesondere einem Spannungswert, ausgebildet sind.

8. Serialisierungsverfahren (1) nach Anspruch 7, wobei der erste elektrische Betriebswert (6) und der zumindest eine weitere elektrische Betriebswert (8) als Stromwerte von einer Stromerfassungsvorrichtung (16), insbesondere mittels eines Shunt-Widerstands (24) oder eines Hall-Sensors oder eines GMR-Sensors, erfasst werden.

9. Serialisierungsverfahren (1) nach einem der Ansprüche 7 oder 8, wobei der erste elektrische Betriebswert (6) als elektrischer Teilbetriebswert einem ersten Teilstrom (I11) eines ersten Leistungshalbleitermoduls (17) des elektrischen Umrichters (4) für eine erste Teilphase (L11) einer ersten Phase (L1) eines elektrischen Netzes (25) entspricht und der zumindest eine weitere elektrische Betriebswert (8) als weiterer elektrischer Teilbetriebswert einem zweiten Teilstrom (121) eines mit dem ersten Leistungshalbleitermodul (17) an einem Gleichspannungskreis (18) parallelgeschalteten weiteren Leistungshalbleitermoduls (19) des elektrischen Umrichters (4) für eine zweite Teilphase (L21) der ersten Phase (L1) des elektrischen Netzes (25) entspricht.

10. Serialisierungsverfahren (1) nach einem der vorhergehenden Ansprüche, wobei mittels einer Auswerteeinheit (19) aus dem serialisierten digitalen Datenstrom (11) die digitalisierten Betriebswerte (23) - welche mit den elektrischen Betriebswerten (3,6,8) und/oder deren Betriebswertsumme (34) korrelieren - in Reglungswerte (35) für eine Prozessoreinheit (21) überführt werden.

11. Serialisierungsverfahren (1) nach Anspruch 10, wobei die Reglungswerte (35) von der Auswerteeinheit (20) an die Prozessoreinheit (21) insbesondere zur Reglung des elektrischen Umrichters (4) übergeben werden.

12. Digitale Serialisierungseinheit (9), eingerichtet zur Ausführung des Serialisierungsverfahrens (1) nach einem der Ansprüche 1 bis 11.

13. Digitale Serialisierungseinheit (9) nach Anspruch 12, umfassend eine Auswerteeinheit (20) zur Auswertung des serialisierten digitalen Datenstroms (11).

14. Elektrischer Umrichter (4) mit einer digitalen Serialisierungseinheit (9) nach Anspruch 12 oder 13, wobei der elektrische Umrichter (4) als Teil eines Antriebssystems (26) für einen Betrieb eines elektrischen Motors (27) an einem elektrischen Netz (25) oder als Teil eines Energieversorgungssystems für eine Umrichtung elektrischer Energie in einem elektrischen Netzsystem vorgesehen ist.
